# EUROPEAN PATENT SPECIFICATION

(11) **EP 0 820 134 B1**
(45) Date of publication and mention of the grant of the patent: **24.10.2001**
(21) Application number: 97304934.9
(22) Date of filing: 07.07.1997
(51) Int. Cl.: H02G 3/06

(54) **Coupled connection for trunking and the like**
Gekoppelte Verbindung für Kabelkanal und dergleichen
Connexion couplée pour conduit et analogue

(30) Priority: 16.07.1996 GB 9614752
(43) Date of publication of application: 21.01.1998
(73) Proprietor: Electrix International Limited, Bishop Auckland, County Durham DL14 6XP (GB)
(72) Inventor: Thompson, Malcolm, Weardale, Co. Durham (GB); Thompson, William Barry, Weardale, Co. Durham (GB)
(74) Representative: Vinsome, Rex Martin

(56) References cited:
- US-A- 2 905 201

## Description

The present invention is concerned with couplings by means of which the adjacent ends of components of trunking and like systems may be connected together. It will be described and illustrated by reference to trunking but may also be used for connecting other types of generally elongate systems by means of which materials are enclosed or conveyed.

It is conventional practice when connecting together two aligned lengths or other components of a trunking system to provide a coupling which overlaps, internally or externally, the adjacent ends of the components and then is connected to the components by bolts or screws, each extending through one component and the coupling. Such forms of coupling provide a structurally sound connection but are characterised by having the heads or the other ends of the bolts or screws visible and projecting outwardly from the outer surface of the trunking.

It is also known to join the components by the use of inwardly projecting "ears" which are cut from outer surface of the trunking which hook onto L-shaped slots in the coupling. Such a connection is described in US2905201.

In industrial installations in which a high standard of hygiene and cleanliness is demanded, for example in the food, pharmaceutical and beverage industries, such outwardly projecting bolts or screws, and inwardly projecting ears, are potential collectors of dirt or infestation and are not easily cleaned and are therefore highly undesirable. However no alternative system is readily available which affords easy connection between lengths of trunking and yet which is easily maintained in a clean condition after it has been installed.

It is an object of the present invention to provide an improved coupled connection which is devised to overcome this problem.

According to the present invention there is provided a coupled connection, the connection comprising:
two aligned components of an open trunking or the like, and a coupling, adapted to extend to within the components, characterised in that
each said component has, in the region of an end thereof adjacent to the other aligned component, at least one internally-projecting stud;
said coupling has at least one elongate slot extending from each of its ends, each said slot being adapted to engage a said stud; and
said connection further comprises a retaining means for each said stud to secure the coupling to the stud.

Because the studs which are an important feature of the coupled connection of the present invention project internally within the trunking or the like, there is no protrusion on the external face of the coupled connection which could otherwise collect dirt or infestation. The system is therefore better able to meet the demands of the high-cleanliness industries such as those mentioned above.

The trunking components which are retained together by the coupling may be, for example, two elongate lengths or a single such length and a bend or T-piece or other intersection unit.

The trunking may be of any cross-sectional profile which is open at one side but is preferably of rectangular, including square, cross-section. Preferably two or more of the internally-projecting studs are provided at the adjacent end of each component, most preferably in diametrically-opposed positions.

Each stud may be secured to the trunking by welding and, in the case where the trunking component has been fabricated by folding from a flat blank, the stud may advantageously be welded in position before the blank is folded. Less preferably, the studs may be secured by crimping.

The coupling is of such dimensions as to be able to extend into the adjacent ends of the two components which are to be connected together by the coupling. Preferably the coupling is of a cross-sectional shape which corresponds generally to that of the components but is of slightly smaller dimensions. At each end of the coupling, one or more, preferably at least two, elongate slots extend into the coupling, of sufficient number and in such a position as to receive one of the inwardly-projecting studs. The length of each slot will be at least sufficient to allow the coupling to extend into the trunking component to the desired extent.

When the coupled connection has been assembled, the coupling is secured to each of the components by a retaining means for each stud. Access to allow fitting of the retaining means in position is afforded by the gap along the open side of the trunking.

In a preferred form of the present invention, the studs are threaded and the retaining means for each stud is a nut threaded upon the stud. However, the studs may alternatively be unthreaded or provided with one or more circumferential or linear grooves and the retaining means may be a spring clip.

After the retaining means have been fitted upon the studs, the open side of the trunking is very preferably closed by means of a lid. The lid may be retained in place simply by means of its dimensions and shape, that is it may be designed to be a clip fit over the trunking, but preferably it is designed to be retained in place by a clip or other feature on its inner face engaging the trunking, for example engaging one or more flanges on the trunking.

The coupled connection of the present invention is preferably made of a suitable metal, in particular of steel. Particularly when the connection is to be used in an installation in a high-cleanliness industry such as those mentioned above, it is particularly preferred that each of the components and the coupling all be made of stainless steel.

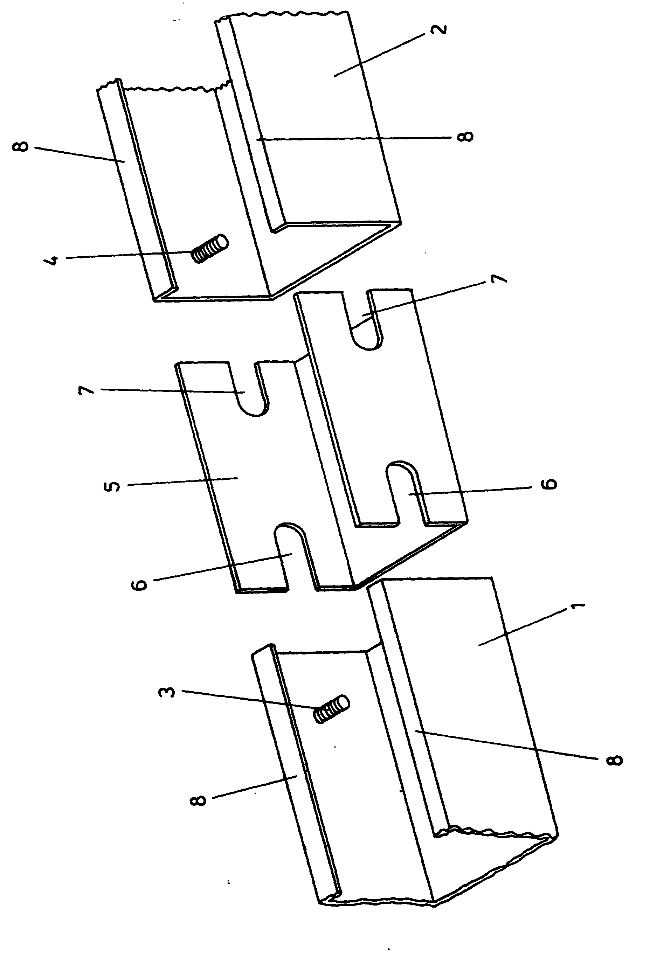

A preferred embodiment of the invention will now be described, by way of example only and not in any limitative sense, with reference to the accompanying drawing, which illustrates a coupled connection embodying the present invention before it has been assembled.

The illustrated connection comprises two aligned lengths, 1, 2 of stainless steel trunking, each being folded from flat sheet to give the illustrated open rectangular profile. The trunking is designed to contain electrical cabling (not shown), air lines or lines conveying a liquid.

Within the illustrated adjacent end of each length of trunking, two aligned threaded studs 3, 4 (only one of which can be seen in each case) project towards each other from the inner face of the trunking, to which the studs were welded before the flat sheet was folded to form the trunking.

A coupling 5, which is of generally similar cross-sectional shape to the trunking but which is sufficiently smaller to fit closely within the trunking, has four elongate slots 6, 7 extending from its opposite ends. The slots are in such positions that, when the ends of the coupling 5 are introduced within the ends of the trunking lengths 1 and 2, the pairs of studs 3 and 4 will enter the corresponding slots 6 and 7. When the studs have entered the slots sufficiently to allow the trunking lengths to be brought together so that their ends abut, nuts (not shown) are threaded upon the studs and are tightened to secure the coupling 5 in position.

Access to enable the nuts to be tightened is gained via the open top of the trunking. Once the coupling is secured in place, a suitable elongate lid (not shown) is in turn secured over each length of the trunking. The lid may be a sprung fit or may be secured, for example, by a clip or other feature engaging under flanges 8 formed as part of the trunking. The flanges are, in general, an optional feature of the trunking and may also be provided on the coupling if desired.

As will readily be understood, and as is apparent from the drawing, the invention enables a trunking connection to be made without leaving any bolts or other prominent features projecting from the outer faces of the trunking.

It will be appreciated by persons skilled in the art that the above embodiment has been described by way of example only and not in any limitative sense, and that various alterations and modifications are possible without departure from the scope of the invention as defined by the appended claims.

## Claims

1. A coupled connection, the connection comprising:
two aligned components (1, 2) of an open trunking or the like, and a coupling (5), adapted to extend to within the components,
**characterised in that**
each said component (1, 2) has, in the region of an end thereof adjacent to the other aligned component, at least one internally-projecting stud (3, 4);
said coupling (5) has at least one elongate slot (6, 7) extending from each of its ends, each said slot being adapted to engage a said stud (3, 4); and
said connection further comprises a retaining means for each said stud (3, 4) to secure the coupling (5) to the stud (3, 4).

2. A connection according to claim 1, wherein the trunking components (1, 2) retained together by the coupling (5) comprise two elongate lengths, or a single such length and a bend or T-piece or other intersection unit.

3. A connection according to claim 1 or 2, wherein the trunking is of substantially rectangular cross-section.

4. A connection according to any one of the preceding claims, wherein two or more of the internally-projecting studs (3, 4) are provided at the adjacent end of each component.

5. A connection according to claim 4, comprising two said internally-projecting studs (3, 4) in diametrically-opposed positions.

6. A connection according to any one of the preceding claims, wherein at each end of the coupling (5), one or more elongate slots (6, 7) extend into the coupling (5), of sufficient number and in such a position as to receive one of the inwardly-projecting studs (3, 4).

7. A connection according to any one of the preceding claims, wherein the studs (3, 4) are threaded and the retaining means for each stud (3, 4) is a nut threaded upon the stud (3, 4).

8. A connection according to any one of claims 1 to 6, wherein the studs (3, 4) are unthreaded or provided with one or more circumferential or linear grooves and the retaining means comprises one or more spring clips.

9. A connection according to any one of the preceding claims, wherein the coupling (5) is of a cross-sectional shape which corresponds generally to that of the components (1, 2) but is of slightly smaller dimensions.

10. A connection according to any one of the preceding claims, further comprising a lid adapted to be retained in place by a clip or other feature on its inner face engaging the trunking.

11. A connection according to any one of the preceding claims, wherein the connection is made of metal.

## Patentansprüche

1. Kupplungsverbindung, wobei die Verbindung aufweist:
zwei ausgerichtete Teile (1,2) eines offenen Kabelkanals oder dergleichen und ein Kupplungsstück (5), das sich innerhalb der Teile erstrecken kann,
**dadurch gekennzeichnet, dass**
jedes der Teile (1,2) in dem Bereich eines Endes, der dem anderen ausgerichteten Teil zugewandt ist, wenigstens einen nach innen ragenden Bolzen (3,4) hat; wobei
das Kupplungsstuck (5) wenigstens einen Längsschlitz (6,7) hat, der sich von jedem seiner Enden aus erstreckt, wobei jeder Schlitz so gebildet ist, daß er einen Bolzen (3,4) aufnehmen kann; und wobei
die Verbindung weiterhin fur jeden der Bolzen (1,2) ein Haltemittel zum Befestigen des Kupplungsstücks (5) an dem Bolzen (3,4) aufweist.

2. Verbindung nach Anspruch 1,
bei dem die Kabelkanalteile (1,2), die durch das Kupplungsstück (5) zusammengehalten werden, zwei Verlängerungsstücke oder ein einzelnes derartiges Verlängerungsstück und einen Bogen oder ein T-Stuck oder andere Verzweigungselemente aufweisen.

3. Verbindung nach Anspruch 1 oder 2,
bei dem der Kabelkanal einen im wesentlichen rechteckigen Querschnitt hat.

4. Verbindung nach einen der vorhergehenden Ansprüche,
bei dem zwei oder mehrere nach innen ragende Bolzen (3,4) am benachbarten Ende jedes Teils vorgesehen sind.

5. Verbindung nach Anspruch 4, aufweisend zwei an diametral gegenüberliegenden Stellen nach innen ragende Bolzen (3,4).

6. Verbindung nach einen der vorhergehenden Ansprüche, bei der sich an jedem Ende des kupplungsstücks (5) ein oder mehrere Längsschlitze (6,7) in ausreichender Anzahl und an einer solchen Stelle in die Kopplung (5) erstrecken, um einen der nach innen ragenden Bolzen (3,4) aufnehmen zu können.

7. Verbindung nach einen der vorhergehenden Ansprüche, bei der die Bolzen (3,4) mit einem Gewinde versehen sind, und das Haltemittel für jeden Bolzen (3,4) eine auf den Bolzen aufgeschraubte Mutter ist.

8. Verbindung nach einen der vorhergehenden Ansprüche 1 bis 6, bei der die Bolzen (3,4) gewindelos oder mit einer oder mehreren Ring- oder Längsnuten versehen sind, und die Haltemittel eine oder mehrere Federclips aufweisen.

9. Verbindung nach einen der vorhergehenden Ansprüche, bei der das Kupplungsstück (5) einen Querschnitt hat, der etwa dem der Teile (1,2) entspricht, jedoch etwas kleiner ist.

10. Verbindung nach einen der vorhergehenden Ansprüche, weiterhin aufweisend einen Verschlußdeckel, der mittels eines Clips oder eines anderen Elements an seiner Innenseite, der in den Kabelkanal eingreift, gehalten werden kahn.

11. Verbindung nach einen der vorhergehenden Ansprüche, bei der die Verbindung aus Metall hergestellt ist.

## Revendications

1. Raccord couplé comprenant:
deux éléments alignés (1, 2) d'une goulotte ouverte ou similaire, et un accouplement (5), adapté pour s'étendre dans les éléments, **caractérisé en ce que**
chaque dit élément (1, 2) possède, dans la zone d'une extrémité de ce dernier, de manière adjacente à l'autre élément aligné, au moins un goujon s'étendant vers l'intérieur (3, 4);
ledit accouplement (5) possède au moins une fente allongée (6, 7) s'étendant à partir de chacune de ses extrémités, chaque dite fente étant adaptée pour se mettre en prise avec un dit goujon (3, 4); et
ledit raccord comprend en outre un moyen de retenue pour chaque dit goujon (3, 4) pour fixer l'accouplement (5) au goujon (3, 4).

2. Raccord selon la revendication 1, selon lequel les éléments de goulotte (1, 2) maintenus ensemble par l'accouplement (5) comprennent deux longueurs allongées, ou une seule longueur de ce type et une pièce incurvée ou en T ou un autre élément d'intersection.

3. Raccord selon la revendication 1 ou 2, selon lequel la goulotte présente une section transversale sensiblement rectangulaire.

4. Raccord selon l'une quelconque des revendications précédentes, selon lequel deux ou plusieurs des goujons se projetant vers l'intérieur (3, 4) sont prévus au niveau de l'extrémité adjacente de chaque élément.

5. Raccord selon la revendication 4, comprenant deux dit goujons se projetant vers l'intérieur (3, 4) dans des positions diamétralement opposées.

6. Raccord selon l'une quelconque des revendications précédentes, selon lequel au niveau de chaque extrémité de l'accouplement (5), une ou plusieurs fentes allongées (6, 7) s'étendent dans l'accouplement (5) en nombre suffisant et selon une position telle qu'elles peuvent recevoir un des goujons se projetant vers l'intérieur (3, 4).

7. Raccord selon l'une quelconque des revendications précédentes, selon lequel les goujons (3, 4) sont filetés et le moyen de retenue prévu pour chaque goujon (3, 4) est un écrou vissé sur chaque goujon (3, 4).

8. Raccord selon l'une quelconque des revendications 1 à 6, selon lequel les écrous (3, 4) ne comportent pas de filetage ou peuvent être pourvus d'une ou de plusieurs rainures circonférentielles ou linéaires et les moyens de retenue comprennent une ou plusieurs brides à ressort.

9. Raccord selon l'une quelconque des revendications précédentes, selon lequel l'accouplement (5) présente une forme dont la coupe transversale correspond généralement à celle des éléments (1, 2) mais présente des dimensions légèrement inférieures.

10. Raccord selon l'une quelconque des revendications précédentes, comprenant en outre un couvercle adapté pour être maintenu en position par un élément de serrage ou un autre élément caractéristique sur sa face intérieure qui vient s'insérer sur la goulotte.

11. Raccord selon l'une quelconque des revendications précédentes, selon lequel le raccord est en métal.
